**Europäisches Patentamt**

**European Patent Office**

**Office européen des brevets**

(19)

(11) Veröffentlichungsnummer : **0 103 772 B2**

(12) ## NEUE EUROPÄISCHE PATENTSCHRIFT

(45) Veröffentlichungstag der neuen Patentschrift :
**10.11.93 Patentblatt 93/45**

(51) Int. Cl.⁵ : **C09J 101/08,** C09J 101/00

(21) Anmeldenummer : **83108322.5**

(22) Anmeldetag : **24.08.83**

(54) **Trockengemische zur Herstellung von wässrigen Klebstoffen sowie deren Verwendung zum Verkleben von Papieren.**

Die Akte enthält technische Angaben, die nach dem Eingang der Anmeldung eingereicht wurden und die nicht in dieser Patentschrift enthalten sind.

(30) Priorität : **02.09.82 DE 3232614**

(43) Veröffentlichungstag der Anmeldung :
**28.03.84 Patentblatt 84/13**

(45) Bekanntmachung des Hinweises auf die Patenterteilung :
**26.03.86 Patentblatt 86/13**

(45) Bekanntmachung des Hinweises auf die Entscheidung über den Einspruch :
**10.11.93 Patentblatt 93/45**

(84) Benannte Vertragsstaaten :
**AT BE CH DE FR GB IT LI NL**

(56) Entgegenhaltungen :
**CH-A- 214 615**
**CH-A- 218 641**
**DE-A- 1 806 005**
**DE-A- 2 533 191**

(56) Entgegenhaltungen :
**DE-A- 3 000 837**
**DE-A- 3 018 764**
**DE-C- 864 396**
**FR-A- 1 369 825**
**GB-A- 33 264**
**GB-A-71 375 0**
**NL-A- 8 508 773**
**Ullmanns Encyklopädie 4. Auflage, Band 9, Seite 192-193**
**Ullmanns Encyklopädie der techn. Chemie, 4. Auflage, Band 5, Seite 737-738**
**The Analysis of Starch Derivatives, J. van der Bij,applied Science publ. Londen 1976, pp.189**

(73) Patentinhaber : **Henkel Kommanditgesellschaft auf Aktien D-40191 Düsseldorf (DE)**

(72) Erfinder : **Eberhardt, Werner Im Staderfeld 8 D-5090 Leverkusen-Opladen (DE)**
Erfinder : **Gardenier, Karl-Josef Boschstrasse 99 D-4000 Düsseldorf 13 (DE)**
Erfinder : **Wegner, Jürgen, Dr. Siegfriedstrasse 21 D-4000 Düsseldorf 11 (DE)**

EP 0 103 772 B2

## Beschreibung

Die Erfindung betrifft Trockengemische zur Herstellung von wäßrigen Klebstoffen bzw. Kleistern auf Basis von wasserlöslichen nichtionogenen Celluloseethern und wasserlöslichen, anionischen Gruppen enthaltenden Stärkeethern sowie deren Verwendung zum Verkleben von Papieren oder anderen saugfähigen Cellulosematerialien.

Pulver zur Herstellung wäßriger Klebstoffzubereitungen auf der Grundlage von Cellulose- bzw. Stärkederivaten, die unter anderem zum Verkleben von Papier, insbesondere Tapeten, verwendet werden, sind bekannt. Jedoch sind diese Klebstoffzubereitungen bzw. Kleister hinsichtlich ihrer Ergiebigkeit und Klebkraft häufig nicht zufriedenstellend. Auch sind die verarbeitungstechnischen Eigenschaften der Pulver in vielen Fällen nicht so, daß sie den gestiegenen Anforderungen genügen. Gelegentlich kann die Dispergierbarkeit zu wünschen übrig lassen. Die Endviskosität der Dispersionen wird unter Umständen erst nach einer halben bis einer ganzen Stunde erreicht. Die verzögerte Löslichkeit hat häufig zur Folge, daß sich die angequollenen Teilchen separieren und man den anzusetzenden Kleister öfters umrühren muß. Ferner kann eine Abhängigkeit der Löslichkeit von der Wasserhärte von Nachteil sein. Durch eine hohe Wasserhärte wird nämlich bei vielen Stärkeethern die Löslichkeit sehr ungünstig beeinflußt.

Aufgabe der vorliegenden Erfindung war es daher, die geschilderten Nachteile zum Beseitigen und solche Stärkeether enthaltenden Gemische herzustellen, die möglichst unabhängig von der Wasserhärte und Temperatur des Wassers sind. Weiter sollte erreicht werden, daß die Kleister hinsichtlich ihrer Klebkraft verbessert werden. bzw. daß infolge gesteigerter Klebkraft weniger Stärkeether verwendet werden muß, um eine befriedigende Verklebung der Papiere bzw. sonstiger zu verklebender Substrate zu erreichen.

Erfindungsgemäß wird diese Aufgabe gelöst durch Trockengemische zur Herstellung von wäßrigen Klebstoffen bzw. Kleistern auf Basis von wasserlöslichen, nichtionogenen Celluloseethern, gekennzeichnet durch einen Gehalt an kaltwasserlöslichen Carboxymethyl- und/oder Propoxysulfonatgruppen enthaltenden unverkleisterten Stärkeethern, die einen Substitutionsgrad hinsichtlich der Carboxymethylgruppen zwischen 0,1 bis 0,6 und der Propylsulfonatgruppen zwischen 0,1 bis 0,5 aufweisen, und in einer Menge von 20 bis 95 Gewichtsprozent, bezogen auf das Gemisch aus Stärkeethern und Celluloseethern, vorliegen. Bei den eingesetzten Stärkeethern soll die Kornstruktur völlig erhalten sein. Sie werden unter Verwendung von wassermischbaren bzw. teilweise wassermischbaren monovalenten Alkoholen mit 1 bis 5 Kohlenstoffatomen hergestellt. Selbsverständlich können bei der Umsetzung auch Gemische dieser Flüssigkeiten als Reaktionsmedium verwendet werden.

Jedoch werden bei vorwiegender Verwendung der genannten Alkohole die günstigsten Resultate erzielt. Selbstverständlich ist es auch möglich, neben dem für die Veretherung benötigten Alkali, das vorzugsweise in Form von Körnern von etwa 0,1 bis 0,7, insbesondere 0,2 bis 0,4 mm, eingesetzt wird, weitere übliche Hilfsstoffe bei der Reaktion mitzuverwenden. So kann sich in einigen Fällen die an sich bekannte leichte transversale Vernetzung mit bifunktionellen Halogenhydrinen wie den Bis-[glycerinchlorhydrin]polyethylenglykolethern oder auch Epichlorhydrin selbst letztlich günstig auf die Struktur der wäßrigen Klebstofflösungen auswirken.

Als Ausgangsmaterial zur Herstellung der erfindungsgemäß einzusetzenden Stärkeether kommen praktisch alle gängigen Stärkesorten in Frage, das heißt Maisstärke, Kartoffelstärke, Tapiokastärke und Reisstärke. Aus praktischen Gründen wird die Erfindung in experimenteller Hinsicht an nativer Kartoffelstärke erläutert. Je nach den gewünschten äußeren Bedingungen kann die Stärke als handelsübliches Produkt mit dem natürlichen Wassergehalt oder aber auch vorgetrocknet eingesetzt werden. Der Carboxymethyl- und/oder der Oxypropylsulfonatrest werden in an sich bekannter Weise eingeführt, wobei während der gesamten Reaktionsdauer der feste Aggregatzustand erhalten bleiben soll (vgl. DE-PS 864 396). Die genannten Reste können simultan oder nacheinander eingeführt werden.

Aufgrund der sauren Eigenschaften der Sulfonsäuregruppierung bzw. des Carboxymethylrestes werden die erfindungsgemäßen Stärkeether in Form ihrer wasserlöslichen Salze verwendet. Aus praktischen Gründen ist das Natriumsalz bevorzugt, wenngleich auch andere wasserlösliche Salze wie etwa Kalium- oder Ammoniumsalze verwendet werden können.

Die nach der vorstehenden Weise hergestellten Stärkeether zeigen ein besonders günstiges Verhalten hinsichtlich der Explosionsfähigkeit nach VDI-Richtlinie 3673 (« Geigy-Staubtest »), so daß praktisch immer die Stufe « StO » erreicht wird.

Die in den Trockengemischen enthaltenen nichtionogenen Celluloseether sind beispielsweise Methylcellulose, Hydroxyethylcellulose, Hydroxyethylhydroxypropylcellulose, Methylhydroxypropylcellulose. Bevorzugt wird Methylcellulose selbst eingesetzt oder ein Celluloseether der überwiegend Methoxylgruppen enthält.

Das Mischungsverhältnis zwischen Stärkeethern und Celluloseethern kann in weiten Grenzen variiert werden. Bevorzugt sind jedoch Trockengemische, in solche denen der Gehalt an in der Kornstruktur erhalte-

2

nen mit Carboxymethyl- bzw. Propylsulfonatgruppen substituierten Stärkeethern zwischen 40 und 85 Gewichtsprozent, bezogen auf das Trockengemisch, liegt.

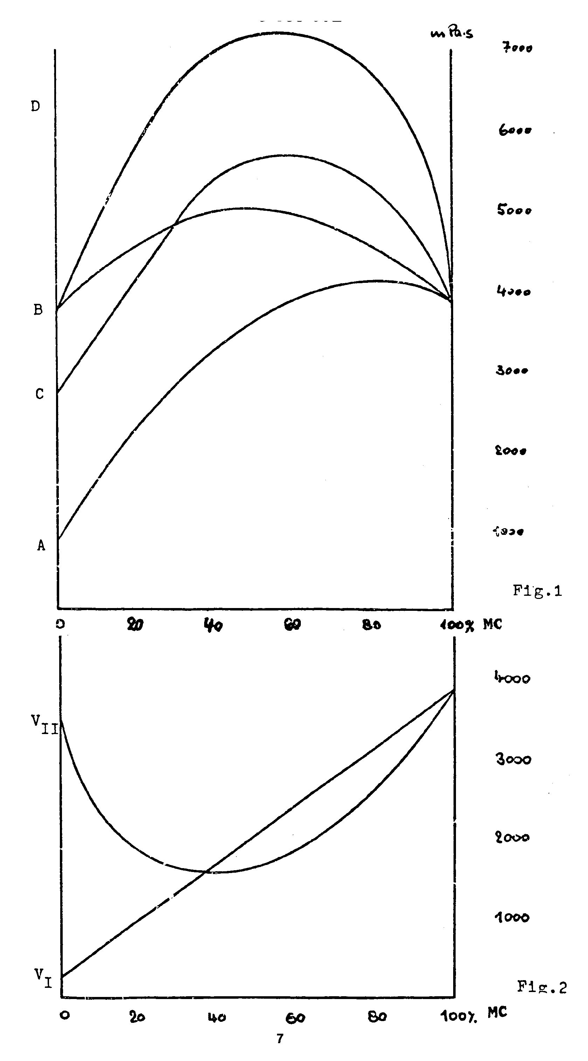

Die Mischungen zeichnen sich durch besonders günstige anwendungstechnische Eigenschaften aus. Sie lassen sich besonders leicht auch in hartem Wasser durch einfaches Aufrühren in Lösung bringen. Ihre Lösungen zeigen bezüglich der Viskosität synergistische Werte. Dies ist in der Figur 1 in den Kurven A bis D dargestellt und konnte keineswegs vorhergesehen werden. Wurden anstellen der nach dem speziellen Verfahren hergestellten Stärkeether solche verwendet, bei der die Carboxymethylgruppen über ein Naß bzw. Trocken-Verfahren unter zumindest teilweiser Zerstörung der Kornstruktur eingeführt waren, zeigten die Viskositätskurven einen linearen Verlauf bzw. waren sogar noch ungünstiger (negativer Synergismus).

Ein bevorzugtes Anwendungsgebiet der erfindungsgemäßen Trockengemische ist deren Einsatz zur Herstellung von wäßrigen Klebstoffen oder Kleistern zum Verkleben von Papier oder anderen saugfähigen Cellulosematerialien, insbesondere Tapeten, auf die verschiedensten gegebenenfalls wenig saugenden oder präparierten Untergründen. Diese Präparationen werden häufig vorgenommen, um ein späteres Abziehen einer Tapete zu erleichtern.

Zur Herstellung der wäßrigen Klebstoffe bzw. Kleister aus Celluloseethern und Stärkeethern können diese direkt in das Wasser eingerührt werden. Mann kann ihnen aber vorher noch - wie häufig üblich - weitere Zusätze zufügen, um gewisse Eigenschaften zu verbessern. Durch die Mitverwendung von redispergierbarem Kunstharzpulver wie beispielsweise Polyvinylacetat kann die Wasserfestigkeit verbessert werden. Weiterhin ist es möglich, Konservierungsmittel und solche Zusätze zu verwenden, die ein Zusammenbacken der Mischungen verhindern.

Das Ansatzverhältnis des Trockengemisches mit Wasser kann in gewissen Grenzen variiert werden, wodurch die Endviskosität der Klebstofflösung bzw. des Kleisters und indirekt die Klebefestigkeit beeinflußt werden können. Im allgemeinen wird man ein Verhältnis der Mischung aus Stärkeether und Celluloseether zu Wasser zwischen 1:25 und 1: 80, insbesondere 1:30 bis 1:65 wählen.

In den nachfolgenden Beispielen wurden die erhaltenen Klebstofflösungen bzw. Kleister - wenn nicht anders angegeben - mit Wasser von 15° d. H. angesetzt. Die Viskosität wurde bei 20 °C nach Brookfield (RVT, 20 Upm, Spindel 4) gemessen.

Die Prüfung der Trockenklebekraft erfolgte an dreilagigem Buchensperrholz (8 ×5 × 0,45 cm). Dazu wurden die Prüfkörper 3 cm von der Schmalseite parallel zur Schmalseite markiert, so daß sich bei einfach überlappter Klebung eine Prüffläche von 15 cm² ergab. Der Kleisterauftrag erfolgte einseitig mit einer 200 μ Spiralrakel. Fixiert wurde mit vier Klammern, wobei insgesamt eine Kraft von etwa 40-50 N auf die Prüffläche ausgeübt wurde. Nach 24 Stunden wurden die Prüfkörper mit der Zerreißmaschine bei einer Prüfgeschwindigkeit von 50 mm/min zerrissen. Je Klebstoffansatz wurden 5 Prüfkörper verleimt und gemessen.

Beispiel 1

Es wurde ein Stärkeether (CMS) hergestellt, wobei man auf 20,8 kg Kartoffelstärke (19% $H_2O$) in 8,0 l 90 %igem Isopropanol nach Alkalisieren mit 1,1 kg Na · OH-Prills (0,2-0,3 mm ∅) unter Rühren 2,8 kg Natriumsalz der Monochloressigsäure bei 60-70°C einwirken ließ. Nach 3 Stunden Reaktionszeit wurde das Umsetzungsprodukt im Vakuum vom Lösungsmittel befreit.

Dieser Stärkeether war frei fließend, die Kornstruktur war erhalten. Obwohl es sich um ein staubförmiges Produkt handelte, ergab das Verhalten im « Geigy-Staubtest » nach VDI-Richtlinie 3673 bezüglich der Staubexplosionsfähigkeit eine Einstufung in die Klasse « StO ». Diese Carboxymethylstärke hatte einen DS von 0,22.

Es wurden mit dem trockenen Stärkeether Mischungen mit Methylcellulose (DS 1,8) hergestellt und diese im Verhältnis 1: 60 in Wasser eingerührt. Dabei ergab sich nach 1 stündigem Stehen der Lösung eine Abhängigkeit der Viskosität (20 °C, Brookfield), wie sie in der Figur 1, Kurve A, wiedergegeben ist. Es ist der Kurvenverlauf (Ordinate mPa.s gegen Abszisse 0 bis 100 Gewichtsprozent Methylcellulose aufgetragen).

Die Festigkeitswerte bei einem Gehalt an 20 %, 40%, 60%, 80% MC liegen bei 73; 88; 92; 85 N/cm².

Beispiel 2

Es wurden 18 kg Kartoffelstärke (10% $H_2O$) mit 2,8 kg Natriumsalz der Monochloressigsäure in einem Turbulentmischer gemischt und mit einer Lösung von 4,0 kg Methanol (99 %ig) und 12,5 g eines Bis-[glycerinchlorhydrin]-polyglykolethers (Mol-Gew. 780) bedüst. Die Alkalisierung erfolgte durch Zugabe von 1,16 kg NaOH in Form von Prills (0,2-0,3 mm ∅). Unter leichtem Mischen wurde 2 Stunden bei 65 bis 70 °C reagieren gelassen. Dann wurde unter Evakuieren ein Methanol/Wasser-Gemisch abgezogen. Die Kornstruktur war völlig erhalten geblieben.

Explosionsverhalten         « StO »
Substitutionsgrad         0,23
Restfeuchte         8% (110 °C im Trockenschrank bis zur Gewichtskonstanz)
Mischung mit Methylcellulose ergab die Kurve B in Figur 1.

Festigkeit : 40 %   60 %   80 %   MC
                    63      72      81     N/cm$^2$.

Beispiel 3

Es wurden 20 kg Kartoffelstärke (19% H$_2$O) mit 1,17 kg Natriumsalz der Monochloressigsäure in einem Turbulentmischer mit 3,0 kg i-Butanol bedüst und nach Zugabe von 0,65 NaOH in Form von Prills (0,2-0,3) zwecks Alkalisierung mit 5,55 kg eine 60 %igen wäßrigen Epoxypropansulfonats (Na-Salz) (franz. Patent 1 369825) und 3,0 kg i-Butanol bedüst. Die Reaktion erfolgt im Mischer bei 45-70 °C während 3 Stunden. Die Reaktionstemperatur wurde langsam gesteigert. Nach 1 Stunde wurde unter leichtem Evakuieren das Lösungsmittel/Wasser-Gemisch abgezogen.
Substitutionsgrad:         Carboxymethylgruppen         0,1
                           Oxypropansulfonatgruppen         0,3
Explosionsverhalten « StO »
Restfeuchte : 8 % (bei 110 °C flüchtige Bestandteile) Mischungen mit Methylcellulose ergaben Kurve C in Figur 1. Durchschnittliche Scherfestigkeit an Buchenholz 72 N/cm$^2$ bei 60 % an Methylcellulose.

Beispiel 4

Es wurden 19 kg Kartoffelstärke (19% H$_2$O) mit 2,9 kg Natriumsalz der Monochloressigsäure in einem Turbulentmischer mit 4,0 kg Ethanol (96 %ig) bedüst, das 35 g des Bis-[glycidylchlorhydrin] polyglykolethers (MG 780) enthielt. Dann wurden 1,2 kg Natriumhydroxid in Form von Prills (02,-0,3 mm $\varnothing$) unter langsamen Mischen zugegeben und anschließend 2,9 kg Propylenoxid gleichmäßig innerhalb 4 Stunden bei 45-50 °C zugesetzt. Sodann wurde die Temperatur langsam auf 70 °C innerhalb von 1,5 Stunden gesteigert. Nach einer weiteren 1/2 Stunde wurde unter Absaugen Ethanol/Wasser abgezogen. Restfeuchte: 8% (flüchtige Anteile bei 110°C) völlig erhaltene Kornstruktur, Explosionsverhalten « StO ». Substitutionsgrad Carboxymethylgruppen 0,22 Gehalt an Oxypropylgruppen 0,5 pro Mol Anhydroglukoseeinheit.
Mischungen mit Methylcellulose ergaben Kurve D in Figur 1. Durchschnittliche Scherfestigkeit an Buchenholz : 76 N/cm$^2$.

Beispiel 5

Handelsübliche 19 kg Maisstärke (13% H$_2$O) wurden mit 2,8 kg Natriumsalz von der Monochloressigsäure in einem Turbulentmischer gemischt und mit 1,1 kg NaOH in 8,0 l 90 %igem i-Propanol bedüst. Die Reaktion unter mäßigem Rühren war nach etwa 2 Stunden bei 60-70 °C beendet. Nach 3 Stunden Stehen wurde dann bei Evakuieren das Gemisch aus i-Propanol/Wasser abgezogen bis zur Restfeuchte von 7,5% (100°C im Trockenschrank). Die Kornstruktur war völlig erhalten, das Explosionsverhalten « StO ».
Eine Trockenmischung aus 60 % der so hergestellten Carboxymethylstärke und Methylcellulose ergab bei einem Ansatzverhältnis von a) 1: 35 bzw. b) 1:60 mit Wasser an Buchenholzverklebungen von durchschnittlicher Scherfestigkeit:
a) 55 N/cm$^2$         b) 45 N/cm$^2$.

Beispiel 6

Der Stärkemischether nach Beispiel 3 wurde im Verhältnis 3 : 7 mit Hydroxyethylcellulose (HEC, 44 % Hydroxyethylgehalt) in Wasser 1: 60 angesetzt. Nach 1 Stunde Quellzeit wurde eine Viskosität von ca. 3 600 mPa.s gefunden. Der errechnete Wert lag bei ca. 3 100 mPa.s. Durchschnittliche Scherfestigkeit an Buchenholz 62 N/cm$^2$ bei 60 % Mischether nach Beispiel 3.

Beispiel 7

Der Stärkemischether nach Beispiel 3 wurde im Verhältnis 3 : 7 mit Methylhydroxypropylcellulose (MHPC, 21 % Methylgruppen, 38 % Hydroxypropylgruppen) in Wasser 1 :60 angesetzt. Nach 1 Stunde Quellzeit wurde eine Viskosität von ca. 2 350 mPa.s gefunden. Der errechnete Wert lag bei ca. 2 150 mPa.s.

EP 0 103 772 B2

Durchschnittliche Scherfestigkeit an Buchenholz 65 N/cm².

Vergleichsversuche

A) Nachdem 18 kg Kartoffelstärke (19% $H_2O$) in 25 kg Wasser suspendiert waren und mit Natronlauge ein pH-Wert von 11 eingestellt war, ließt man unter Rühren 4,5 g Epichlorhydrin einfließen und 16 Stunden bei 30 °C stehengelassen. Anschließend wurden in die Stärkesuspension 3,3kg des Natriumsalzes von Monochloressigsäure eingetragen. Die Suspension wurde mittels Dosierpumpe mit 2,5 kg 50 %iger Natronlauge so vermischt, daß immer proportionale Volumenteile von Suspension und Natronlauge vorlagen. Das Reaktionsgemisch wurde durch einen dampfbeheizten Statikmischer gepumpt, wobei eine Verweilzeit in der Heizzone von 30 Sekunden gegeben war. Die Produkttemperatur am Austritt betrug 95 °C. Die hochviskose Reaktionsmischung wurde auf einem Walzentrockner getrocknet und die Carboxymethylstärke vermahlen. Die Kornstruktur des Stärkekorns war nicht mehr zu erkennen.

Zum Vergleich wurden Mischungen dieser Carboxymethylstärke sowie Methylcellulose hergestellt. Die gefundenen Viskositätswerte sind in der Figur 2 eingetragen und mit $V_I$ gekennzeichnet.

B) Es wurde eine handelsübliche nach einem Trockenverfahren hergestellte Carboxymethylcellulose eines Substitutionsgrades von 0,7 mit Methylcellulose vermischt. Die gefundenen Viskositätswerte sind in Figur 2 mit $V_{II}$ gekennzeichnet.

## Patentansprüche

1. Trockengemische zur Herstellung von wäßrigen Klebstoffen bzw. Kleistern auf Basis von wasserlöslichen, nichtionogenen Celluloseethern, gekennzeichnet durch einen Gehalt an kaltwasserlöslichen, Carboxymethyl- und/oder Propylsulfonatgruppen enthaltenden unverkleisterten Stärkeethern, die einen Substitutionsgrad hinsichtlich der Carboxymethylgruppen zwischen 0,1 bis 0,6 und der Propylsulfonatgruppen zwischen 0,1 bis 0,5 aufweisen deren Kornstruktur völlig erhalten ist und die unter Verwendung von wassermischbaren bzw. teilweise wassermischbaren, monovalenten Alkoholen mit 1 bis 5 Kohlenstoffatomen hergestellt wurden, und die in einer Menge von 20 bis 95 Gewichtsprozent, bezogen auf das Gemisch aus Stärkeethern und Celluloseethern, vorliegen.

2. Trockengemische nach Anspruch 1, gekennzeichnet durch einen Gehalt an Methylcellulose und/oder Hydroxyethylcellulose und/oder Hydroxyethylhydroxypropylcellulose und/oder Methylhydroxypropylcellulose als wasserlösliche, nichtionogene Celluloseether.

3. Verwendung der Trockengemische nach einem der Ansprüche 1 oder 2 zur Herstellung von wäßrigen Klebstoffen bzw. Kleistern zum Verkleben von Papieren oder anderen saugfähigen Cellulosematerialien, insbesondere Tapeten.

4. Verwendung von Trockengemischen nach Anspruch 3, wobei der Gehalt an in der Kornstruktur erhaltenen mit Carboxymethyl- bzw. Propylsulfonatgruppen substituierten Stärkeethern zwischen 40 und 85 Gewichtsprozent, bezogen auf das Trockengemisch, liegt.

## Claims

1. Dry mixtures for the preparation of aqueous adhesives or pastes based on water-soluble nonionic cellulose ethers, characterized by a content of cold-water-soluble non-gelatinized starch ethers containing carboxymethyl and/or propyl sulfonate groups which have a degree of substitution in regard to the carboxymethyl groups of 0.1 to 0.6 and in regard to the propyl sulfonate groups of 0.1 to 0.5, of which the grain structure is fully intact, which have been produced using water-miscible or partly water-miscible, monohydric $C_{1-5}$ alcohols and which are present in a quantity of 20 to 95% by weight, based on the mixture of starch ethers and cellulose ethers.

2. Dry mixtures as claimed in claim 1, characterized by a content of methyl cellulose and/or hydroxyethyl cellulose and/or hydroxyethyl-hydroxypropyl cellulose and/or methyl hydroxypropyl cellulose as water-soluble nonionic cellulose ethers.

5

3. The use of the dry mixtures claimed in claim 1 or 2 for the preparation of aqueous adhesives or pastes for pasting papers or other absorbent cellulose materials, particularly wallpapers.

4. The use of dry mixtures as claimed in claim 3, the content of carboxymethyl- or propyl sulfonate-substituted starch ethers with an intact grain structure amounting to between 40 and 85% by weight, based on the dry mixture.

## Revendications

1. Mélange sec pour la préparation d'adhésifs aqueux ou de colles de pâte, à base d'éthers de cellulose non-ionogènes solubles à l'eau, caractérisé en ce qu'il contient des éthers d'amidon non empâtés solubles dans l'eau froide, contenant des groupes carboxyméthyle et/ou propylsulfonate, qui présentent un taux de substitution qui est, par rapport aux groupes carboxyméthyle, de 0,1 à 0,6 et, par rapport aux groupes propylsulfonate, de 0,1 à 0,5, dont la structure granulaire est entièrement conservée et qui ont été fabriqués en utilisant des alcools monovalents avec 1 à 5 atomes de carbone, miscibles ou partiellement miscibles à l'eau et qui sont présents dans une proportion de 20 à 95 % en poids, calculée sur le mélange d'éthers d'amidon et d'éthers de cellulose.

2. Mélange sec suivant la revendication 1, caractérisé par une teneur en méthylcellulose, et/ou en hydroxyéthylcellulose, et/ou en hydroxyéthylhydroxypropylcellulose, et/ou en méthylhydroxypropylcellulose, en tant qu'éther de cellulose soluble dans l'eau, non-ionogène.

3. Utilisation du mélange sec suivant l'une des revendications 1 ou 2, pour la fabrication d'adhésifs aqueux ou de colles de pâte pour coller des papiers ou d'autres matériaux cellulosiques absorbants, en particulier des papiers peints.

4. Utilisation de mélanges secs suivant la revendication 3, dont la teneur en éthers d'amidon substitués par des groupes carboxyméthyle ou propylsulfonate dont la structure granulaire est maintenue, se situe entre 40 et 85 % en poids, calculé sur le mélange sec.

Fig.1

Fig.2